# EUROPEAN PATENT SPECIFICATION

(11) **EP 2 531 871 B1**
(45) Date of publication and mention of the grant of the patent: **13.11.2013**
(21) Application number: 11704098.0
(22) Date of filing: 03.02.2011
(51) Int. Cl.: G01S 7/481

(54) **VEHICLE PROVIDED WITH A DEVICE FOR DETECTING EXTERNAL LASER MEASURING EQUIPMENT AND METHOD FOR MOUNTING SUCH A DEVICE**
FAHRZEUG MIT EINEM DETEKTOR FÜR EXTERNE LASERMESSGERÄTE UND VERFAHREN ZUR MONTAGE EINES DERARTIGEN DETEKTORS
VÉHICULE ÉQUIPÉ D'UN DISPOSITIF POUR DÉTECTER UN ÉQUIPEMENT DE MESURE LASER EXTERNE ET PROCÉDÉ POUR LE MONTAGE D'UN TEL DISPOSITIF

(30) Priority: 05.02.2010 NL 2004199
(43) Date of publication of application: 12.12.2012
(73) Proprietor: Stichting Noble House, 2182 DZ Hillegom (NL)
(72) Inventor: DE WILDE, Tom Marnix Alexander, NL-2160 AC Hillegom (NL); DIJKSTRA, Patrick, NL-3465 TJ Driebruggen (NL)
(74) Representative: Vernout, Robert
(86) International application number: PCT/NL2011/050073
(87) International publication number: WO 2011/096803

(56) References cited:
- US-A- 4 721 852
- US-A- 5 243 179

## Description

The present invention relates to a vehicle in accordance with the preamble of claim 1. Such a vehicle is described in US 4,721,852.

The object of the invention is to provide means by which a better, quicker and more reliable detection of laser pulses emitted by external measuring equipment can be realised.

According to the invention, the receiving element, in stretched condition, extends along a length of at least 0.25 m on the vehicle surface. An advantage of such a transparent receiving element is that the detectors themselves can be mounted within the vehicle, whilst laser pulses can be efficiently received by the receiving element. As a result, the detectors are not exposed to external influences, which influences may be harmful to the detectors. Another advantage of such a receiving element is that such receiving elements are capable of receiving laser pulses over the entire external surface thereof, thereby increasing the chance that laser pulses emitted by external measuring equipment will be received and will reach the detector. Thus, a vehicle is provided which is capable of detecting laser pulses emitted by external measuring equipment in a reliable and/or efficient and/or adequate manner.

In one embodiment of a vehicle according to the invention, the receiving element comprises a part of the glass fibre cable in stretched condition. In particular at least that part of the glass fibre caber is of the "side illuminating" or "side sensitive" type, which implies that light from outside can easily enter from the side. Said part of the glass fibre caber can be easily attached to the exterior of the vehicle, being capable of efficiently receiving laser pulses both through the circumference of the cable and through the end. Preferably, said part of the glass fibre cable has a length of at least 0.5 m, more preferably at least 1.0 m, even more preferably 1.5 m. The greater the length of said part of the glass fibre cable, the greater the chance that laser pulses will be received by said part. Preferably, said part of the glass fibre cable extends at least substantially around the entire circumference of the vehicle for receiving laser pulses from several sectors around the vehicle. In this way the chance that the laser pulses will be received is further increased, because it does not matter from which sector the laser pulses are emitted.

In another embodiment of the vehicle according to the invention, the receiving element comprises a transparent plate. Such a transparent plate has a proportionally large external surface for receiving laser pulses, so that there is a greater chance that the laser pulses will be detected by the vehicle.

In another embodiment of the vehicle according to the invention, the receiving element comprises a transparent coating. Such a coating has the advantage that it can be easily applied to a large part of the external surface of the vehicle, more in particular, the entire external surface of the vehicle may be provided with such a coating. This further increases the chance that the laser pulses will be detected by the vehicle.

In another embodiment of the vehicle according to the invention, the vehicle is provided with several receiving elements, each receiving element being connected to the glass fibre cable, which receiving elements are attached to the exterior of the vehicle in several areas for receiving laser pulses from several sectors around the vehicle. An advantage of using several receiving elements is that this makes it possible to determine from which sector the laser pulses were received, which can provide information as to the location of the measuring equipment. The vehicle is preferably provided with several detectors, to each of which detectors a glass fibre cable is connected. Preferably, the detector is mounted in a central housing in the vehicle. The central housing can thus be easily mounted in the vehicle, after which only the glass fibre cables and/or the receiving elements need to be installed and/or mounted.

In another embodiment of a vehicle according to the invention, the glass fibre cable comprises several parallel glass fibres. Because of this, the glass fibre cable is relatively flexible, making it possible to use a smaller bend radius of the cable. Furthermore, the cable can thus be more easily attached to the exterior of the vehicle.

In another embodiment of the vehicle according to the invention, the glass fibre cable has a cross-sectional area of 0.1 - 20 mm², preferably 0.4 - 10 mm², more preferably 0.5 - 2 mm².

The invention also relates to a method for mounting at least one detector inside a vehicle, which detector is designed to detect external measuring equipment that emits laser pulses for detecting or measuring the speed of an object, such as a vehicle, which method further comprises fixing an end of at least one glass fibre cable in front of the detector, facing said detector, and mounting a transparent receiving element that is connected to the glass fibre cable to the exterior of the vehicle for receiving the laser pulses and passing said pulses to the glass fibre cable, such that the receiving element extends along a length of at least 0.25 m on the surface of the vehicle.

The invention will now be explained in more detail with reference to figures illustrated in a drawing, in which:
- Figure 1 is a top plan view of a vehicle according to the invention;
- Figure 2 is a side view of a vehicle according to another embodiment of the invention;
- Figure 3 is a detail view of a receiving element according to one embodiment of the invention; and
- Figure 4 is a side view of a receiving element according to another embodiment of the invention.

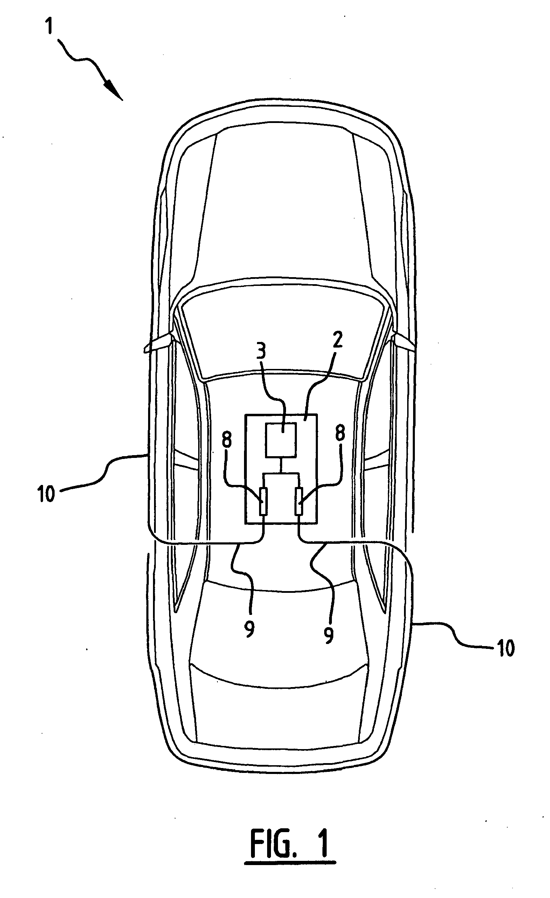

In figure 1 a vehicle 1 is schematically shown. The vehicle 1 is provided with a housing 2 with a central processing unit 3. The central processing unit 3 is connected to two laser detectors 8, which are capable of detecting the laser signal from an external laser speed measuring device.

The laser detectors 8 are disposed in the housing 2 at a central location in the vehicle 1. A glass fibre cable 9 is attached to the detection surface of each detector 8, such that laser pulses being transported through the glass fibre cable 9 and exiting the end of the glass fibre cable can be incident on the detector 8. The glass fibre cables 9 each consist of a bundle of glass fibres having a total cross-sectional area of about 1 mm².

A part 10 of each glass fibre cable 9 is attached to the exterior of the vehicle, which parts 10 of the glass fibre cables 9 are capable of receiving laser pulses from external measuring equipment. The parts 10 thus form a transparent receiving element. Said parts of the glass fibre cable are of the "side illuminating" or "side sensitive" type, so that a laser beam can readily enter the glass fibre cable. The parts 10 of the glass fibre cables 9 are mounted at different areas of the vehicle 1, such that they are directed toward two different sectors, so that laser pulses from external laser equipment from said two sectors can be incident on the parts 10. In particular, the parts 10 are attached to the front and the rear side of the vehicle. The length of the parts pin is at least 0.25 m, preferably more than 0.5 m, even more preferably 0.5 m. Because of said length, there is a good chance that the laser pulses will be received by the parts 10.

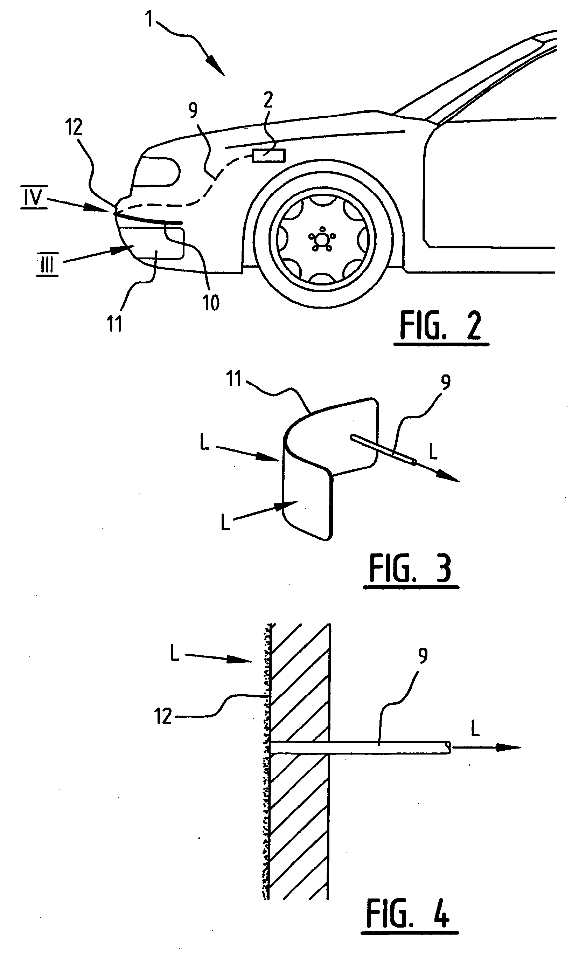

Figure 2 shows a vehicle 1 comprising several examples of receiving elements. A glass fibre cable part 10 as described above is attached to the front bumper of the vehicle. The vehicle is further provided with a plate-shaped, transparent receiving element 11, which plate-shaped transparent receiving element 11 is connected to a glass fibre cables 9 (see also figure 3). The vehicle 1 may also be provided with a transparent coating 12 (see figure 4), which coating 12 is connected to a glass fibre cable 9. Connecting several glass fibre cables 9, which are each connected to a detector 8, to the coating 12 enables the central processing unit 3 to determine from which sector of the vehicle the laser pulses were received, since the period of time between receiving a laser pulse and the arrival of said polls at the detector depends on the distance between the reception point and the glass fibre cable. According to another possibility, only the first signal received by a detector 8 is processed, in which case it is clear to which glass fibre cables 9 said detector is connected and information is thus provided regarding the sector from which the laser pulses emanate, since the glass fibre cable 9 that is located nearest the reception point will transport the signal the most quickly to the detector 8. The further away the glass fibre cables 9 are located from the reception point, the weaker the signal will be, so that there is a possibility that no signal will be processed at a number of glass fibre cables 9 and detectors 8. Use is possibly made of this fact, since the inability of a detector to process a signal can provide information regarding the sector from which the laser pulses emanate.

It is noted that the invention is not limited to the above-discussed embodiment, but that it also extends to other variants that fall within the scope of the appended claims.

## Claims

1. A vehicle (1) provided with at least one detector (8) designed to detect external measuring equipment adapted to emit laser pulses for detecting or measuring the speed of the vehicle (1), which vehicle (1) is further provided with at least one glass fibre cable (9) whose first end is fixed in front of the detector (8), facing said detector (8), and with a transparent receiving element (10, 11, 12) having a predetermined length connected to the glass fibre cable (9) for receiving the laser pulses and passing said pulses on to the glass fibre cable (9), which receiving element (10, 11, 12) is attached to the exterior of the vehicle, **characterized in that** the receiving element (10, 11, 12) is attached along said predetermined length on the vehicle surface, said predetermined length being at least 0.25 m.

2. A vehicle (1) according to claim 1, wherein the receiving element (10) comprises a part of the glass fibre cable (9) in stretched condition, which part is preferably of the side illuminating or side sensitive type.

3. A vehicle according to claim 2, wherein said part (10) of the glass fibre cable (9) has a length of at least 0.5 m, more preferably at least 1.0 m, even more preferably 1.5 m.

4. A vehicle (1) according to claim 2 or 3, wherein said part (10) of the glass fibre cable (9) extends at least substantially around the entire circumference of the vehicle (1) for receiving laser pulses from several sectors around the vehicle (1).

5. A vehicle (1) according to any one of claims 1-4, wherein the receiving element comprises a transparent plate (11).

6. A vehicle (1) according to any one of claims 1-5, wherein the receiving element comprises a transparent coating (12) .

7. A vehicle (1) according to any one of claims 1-6, wherein the vehicle (1) is provided with several receiving elements (10, 11, 12), each receiving element (10, 11, 12) being connected to the glass fibre cable (9), which receiving elements (10, 11, 12) are attached.to the exterior of the vehicle (1) in several areas for receiving laser pulses from several sectors around the vehicle (1).

8. A vehicle (1) according to claim 7, wherein the vehicle (1) is provided with several detectors (8), to each of which detectors (8) a glass fibre cable (9) is connected.

9. A vehicle (1) according to any one of claims 1-8, wherein the detector (8) is mounted in a central housing (2) in the vehicle (1).

10. A vehicle (1) according to any one of claims 1-9, wherein the glass fibre cable (9) comprises several parallel glass fibres.

11. A vehicle (1) according to any one of claims 1-10, wherein the glass fibre cable (9) has a cross-sectional area of 0.1 - 20 mm², preferably 0.4 - 10 mm², more preferably 0.5 - 2 mm².

12. A method for mounting at least one detector (8) inside a vehicle, which detector (8) is designed to detect external measuring equipment that emits laser pulses for detecting or measuring the speed of an object, such as a vehicle (1), which method further comprises fixing an end of at least one glass fibre cable (9) in front of the detector (8), facing said detector (8), and mounting a transparent receiving element (10, 11, 12) having a predetermined length that is connected to the glass fibre cable (9) to the exterior of the vehicle (1) for receiving the laser pulses and passing said pulses to the glass fibre cable (9), **characterized in that** the receiving element (10, 11, 12) is attached along said predetermined length on the vehicle surface, said predetermined length being at least 0.25 m (1).

13. A method according to claim 12, wherein the receiving element (10) comprises a part of the glass fibre cable (9), and wherein the method comprises attaching said part (10) of the glass fibre cable (9) to the exterior of the vehicle (1).

14. A method according to claim 13, wherein the part (10) of the glass fibre cable (9) that is attached to the exterior has a length of at least 0.5 m, more preferably at least 1.0 m, even more preferably 1.5 m.

15. A method according to claim 13 or 14, wherein the receiving element comprises a transparent coating (12), wherein the method comprises the application of said coating (12) to the exterior of the vehicle (1).

## Patentansprüche

1. Fahrzeug (1) ausgestattet mit mindestens einem Detektor (8), welcher vorgesehen ist um externes Messgerät zu erfassen, welches geeignet ist Laserimpulse zur Ermittlung oder Messung der Geschwindigkeit des Fahrzeugs (1) auszustrahlen, das Fahrzeug (1) weiterhin ausgestattet ist mit mindestens einem Glasfaserkabel (9), dessen erstes Ende vor dem Detektor (8) befestigt ist, wobei dieses dem Detektor (8) zugewandt ist, und mit einem transparenten Empfangselement (10, 11, 12) mit einer vorbestimmten Länge, welches mit dem Glasfaserkabel (9) verbunden ist für den Empfang der Laserimpulse und dem Weiterleiten der Impulse an das Glasfaserkabel (9), wobei das Empfangselement (10, 11, 12) an der Außenseite des Fahrzeugs befestigt ist,
**dadurch gekennzeichnet, dass**
das Empfangselement (10, 11, 12) entlang der vorbestimmten Länge an der Fahrzeugoberfläche befestigt ist, wobei die vorbestimmte Länge mindestens 0,25 m ist.

2. Fahrzeug (1) nach Anspruch 1, wobei das Empfangselement (10) ein Teil des Glasfaserkabels (9) in gestrecktem Zustand umfasst, wobei der Teil vorzugsweise von der Seitenbeleuchtungsart oder Seitenempfindlichkeitsart ist.

3. Fahrzeug (1) nach Anspruch 2, wobei das Teil (10) des Glasfaserkabels (9) eine Länge von mindestens 0,5 m, vorzugsweise von mindestens 1,0 m, besonders bevorzugt von 1,5 m hat.

4. Fahrzeug (1) nach Anspruch 2 oder 3, wobei das Teil (10) des Glasfaserkabels (9) sich mindestens im Wesentlichen um den gesamten Umfang des Fahrzeugs (1) erstreckt für den Empfang von Laserimpulsen aus mehreren Bereichen um das Fahrzeug (1) herum.

5. Fahrzeug (1) nach einem der Ansprüche 1 bis 4, wobei das Empfangselement eine transparente Platte (11) umfasst.

6. Fahrzeug (1) nach einem der Ansprüche 1 bis 5, wobei das Empfangselement eine transparente Beschichtung (12) umfasst.

7. Fahrzeug (1) nach einem der Ansprüche 1 bis 6, wobei das Fahrzeug (1) mit mehreren Empfangselementen (10, 11, 12) versehen ist, jedes Empfangselement (10, 11, 12) mit dem Glasfaserkabel (9) verbunden ist, wobei die Empfangselemente (10, 11, 12) an der Außenseite des Fahrzeugs (1) an mehreren Stellen befestigt sind für den Empfang von Laserimpulsen aus mehreren Bereichen um das Fahrzeug (1) herum.

8. Fahrzeug (1) nach Anspruch 7, wobei das Fahrzeug (1) mit mehreren Detektoren (8) versehen ist, wobei jeder der Detektoren (8) jeweils mit einem Glasfaserkabel (9) verbunden ist.

9. Fahrzeug (1) nach einem der Ansprüche 1 bis 8, wobei der Detektor (8) in einem zentralen Gehäuse (2) in dem Fahrzeug (1) befestigt ist.

10. Fahrzeug (1) nach einem der Ansprüche 1 bis 9, wobei das Glasfaserkabel (9) mehrere parallele Glasfasern umfasst.

11. Fahrzeug (1) nach einem der Ansprüche 1 bis 10, wobei das Glasfaserkabel (9) eine Querschnittsfläche von 0,1 mm² bis 20 mm², vorzugsweise 0,4 mm² bis 10 mm², besonders bevorzugt 0,5 mm² bis 2 mm² hat.

12. Verfahren zum Befestigen von mindestens einem Detektor (8) innerhalb eines Fahrzeugs, der Detektor (8) ausgebildet ist externes Messgerät zu erfassen, welches Laserimpulse zur Erfassung und Messung der Geschwindigkeit eines Objekts, wie ein Fahrzeug (1), ausstrahlt, das Verfahren weiterhin umfasst Befestigen eines Endes von mindestens einem Glasfaserkabel (9) vor dem Detektor (8), wobei dieses dem Detektor (8) zugewandt ist, und Befestigen eines transparenten Empfangselements (10, 11, 12) mit einer vorbestimmten Länge, welches mit dem Glasfaserkabel (9) an der Außenseite des Fahrzeugs (1) verbunden wird für den Empfang der Laserimpulse und dem Weiterleiten der Impulse an das Glasfaserkabel (9), **dadurch gekennzeichnet, dass** das Empfangselement (10, 11, 12) entlang der vorbestimmten Länge an der Fahrzeugoberfläche befestigt wird, wobei die vorbestimmte Länge mindestens 0,25 m ist.

13. Verfahren nach Anspruch 12, wobei das Empfangselement (10) ein Teil des Glasfaserkabels (9) umfasst, und wobei das Verfahren das Anbringen des Teils (10) des Glasfaserkabels (9) an die Außenseite des Fahrzeugs (1) umfasst.

14. Verfahren nach Anspruch 13, wobei das Teil (10) des Glasfaserkabels (9) das an der Außenseite angebracht wird, eine Länge von mindestens 0,5 m, vorzugsweise von mindestens 1,0 m, besonders bevorzugt von 1,5 m hat.

15. Verfahren nach Anspruch 13 oder 14, wobei das Empfangselement eine transparente Beschichtung (12) umfasst, wobei das Verfahren das Auftragen der Beschichtung (12) an die Außenseite des Fahrzeugs (1) umfasst.

## Revendications

1. Véhicule (1) doté d'au moins un détecteur (8) conçu pour détecter un équipement de mesure externe adapté pour émettre des impulsions laser pour la détection ou la mesure de la vitesse du véhicule (1), lequel véhicule (1) est doté en outre d' au moins un câble de fibre de verre (9) dont la première extrémité est fixée devant le détecteur (8), en faisant face audit détecteur (8), et d'un élément de réception transparent (10, 11, 12) qui a une longueur prédéterminée, connecté au câble de fibre de verre (9) pour la réception des impulsions laser et pour le passage desdites impulsions sur le câble de fibre de verre (9), lequel élément de réception (10, 11, 12) est fixé à l'extérieur du véhicule, **caractérisé en ce que** l'élément de réception (10, 11, 12) est fixé le long de ladite longueur prédéterminée sur la surface du véhicule, ladite longueur prédéterminée étant égale à au moins 0,25 m.

2. Véhicule (1) selon la revendication 1, dans lequel l'élément de réception (10) comprend une partie du câble de fibre de verre (9) à état étiré, laquelle partie est de préférence du type à éclairage latéral ou à captation latérale.

3. Véhicule selon la revendication 2, dans lequel ladite partie (10) du câble de fibre de verre (9) a une longueur égale à au moins 0,5 m, mieux de préférence égale à au moins 1,0 m, mieux encore de préférence égale à 1,5 m.

4. Véhicule (1) selon la revendication 2 ou 3, dans lequel ladite partie (10) du câble de fibre de verre (9) s'étend substantiellement au moins sur toute la circonférence du véhicule (1) pour la réception des impulsions laser en provenance de plusieurs secteurs entourant le véhicule (1).

5. Véhicule (1) selon l'une quelconque des revendications 1 à 4, dans lequel l'élément de réception comprend une plaque transparente (11).

6. Véhicule (1) selon l'une quelconque des revendications 1 à 5, dans lequel l'élément de réception comprend un revêtement transparent (12).

7. Véhicule (1) selon l'une quelconque des revendications 1 à 6, dans lequel le véhicule (1) est doté de plusieurs éléments de réception (10, 11, 12), chaque élément de réception (10, 11, 12) étant connecté au câble de fibre de verre (9), lesquels éléments de réception (10, 11, 12) sont fixés à l'extérieur du véhicule (1) dans plusieurs zones pour la réception des impulsions laser en provenance de plusieurs secteurs entourant le véhicule (1).

8. Véhicule (1) selon la revendication 7, dans lequel le véhicule (1) est doté de plusieurs détecteurs (8), un câble de fibre de verre (9) étant connecté à chacun des détecteurs (8).

9. Véhicule (1) selon l'une quelconque des revendications 1 à 8, dans lequel le détecteur (8) est monté dans un boîtier central (2) dans le véhicule (1).

10. Véhicule (1) selon l'une quelconque des revendications 1 à 9, dans lequel le câble de fibre de verre (9) comprend plusieurs fibres de verre en parallèle.

11. Véhicule (1) selon l'une quelconque des revendications 1 à 10, dans lequel le câble de fibre de verre (9) a une section transversale entre 0,1 mm² et 20 mm², de préférence entre 0,4 mm² et 10 mm², mieux encore de préférence entre 0,5 mm² et 2 mm².

12. Procédé pour le montage d'au moins un détecteur (8) à l'intérieur d'un véhicule, lequel détecteur (8) est conçu pour détecter un équipement de mesure externe qui émet des impulsions laser pour la détection ou la mesure de la vitesse d'un objet, tel qu'un véhicule (1), lequel procédé comprend en outre la fixation d'une extrémité d' au moins un câble de fibre de verre (9) devant le détecteur (8), en faisant face audit détecteur (8), et le montage d'un élément de réception transparent (10, 11, 12) qui a une longueur prédéterminée, qui est connecté au câble de fibre de verre (9) à l'extérieur du véhicule (1) pour la réception des impulsions laser et pour le passage desdites impulsions sur le câble de fibres de verre (9), **caractérisé en ce que** l'élément de réception (10, 11, 12) est fixé le long de ladite longueur prédéterminée sur la surface du véhicule, ladite longueur prédéterminée étant égale à au moins 0,25 m (1).

13. Procédé selon la revendication 12, dans lequel l'élément de réception (10) comprend une partie du câble de fibre de verre (9), et dans lequel le procédé comprend la fixation de ladite partie (10) du câble de fibre de verre (9) à l'extérieur du véhicule (1).

14. Procédé selon la revendication 13, dans lequel la partie (10) du câble de fibre de verre (9) qui est fixée à l'extérieur, a une longueur égale à au moins 0,5 m, mieux de préférence égale à au moins 1,0 m, mieux encore de préférence égale à 1,5 m.

15. Procédé selon la revendication 13 ou 14, dans lequel l'élément de réception comprend un revêtement transparent (12), dans lequel le procédé comprend l'application dudit revêtement (12) à l'extérieur du véhicule (1).
